# EUROPEAN PATENT APPLICATION

(11) **EP 2 352 110 A1**
(43) Date of publication of application: **03.08.2011**
(21) Application number: 10015140.6
(22) Date of filing: 30.11.2010
(51) Int. Cl.: G06K 9/00, H04N 5/232

(54) **Object image cropping method, object image cropping system and digital image device**

(30) Priority: 01.12.2009 TW 98141042
(71) Applicant: HTC Corporation, Taoyuan County 330 (TW)
(72) Inventor: Tsai, Wei-Sheng, Taoyuan City Taoyuan County 330 (TW); Lin, Yu-Chung, Taoyuan City Taoyuan County 330 (TW)
(74) Representative: Klang, Alexander H.

(57) **Abstract**

An image cropping method adapted to a digital image device with a first shooting parameter set to take a digital image of an object with a predetermined image size is provided. The method comprises performing an object detection to obtain a first object image size of the object. Then, according to the first object image size and the predetermined image size, the first shooting parameter set is changed to a second shooting parameter set so that the first image size is changed to a second image size under the second shooting parameter set, wherein the second image size is substantailly equal to the predetermined image size. The digital image device with the second shooting parameter set takes a preliminary image of the object. The preliminary image is cropped into the digital image of the object.

## Description

### BACKGROUND OF THE INVENTION

### Field of the Invention

The invention relates to an image shooting method, system, and a digital image device. More particularly, the invention relates to an object image cropping method, system, and a digital image device.

### Description of Related Art

In modem times with information explosion, humans cannot live without electronic products. With functions of instantaneous shooting, recording, shooting results preview, etc, digital video devices are widely accepted by consumers and thus have great market. However, when a user want to get the required thumbnail figure as the thumbnail representing the personal characteristic for a variety of social communication websites or platforms such as micro blogs or instant messengers, manually circling humans, creatures, or articles in images is usually needed in advance. Afterwards the selected portion of the image is clipped and then the partial image clipped is performed image processing on so as to make the clipped image size conform with the uploading size requested by the system provider.

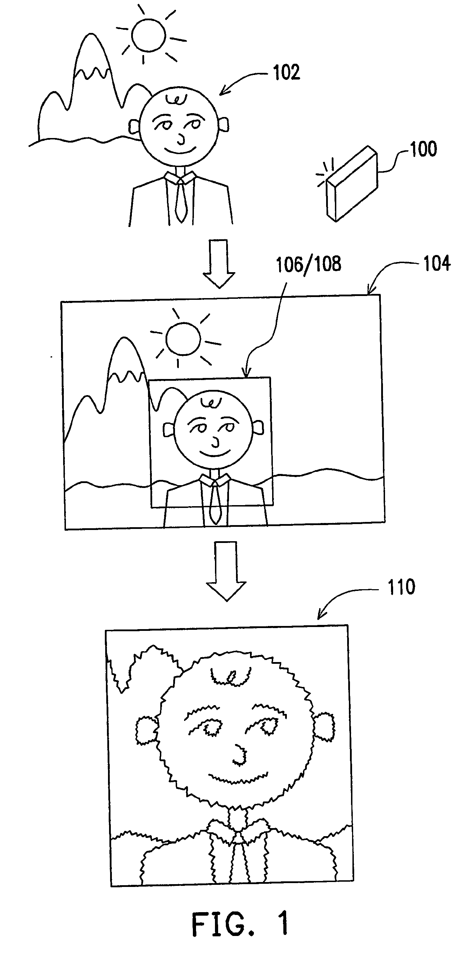

FIG. 1 is a schematic view of a conventional image cropping method. A shooting image 104 is generated after a figure 102 is shot by the digital image device 100. When a user want to clip a portion of the shooting image 104 to serve as a thumbnail, the user have to manually circle the frame 106 of the required portion of the shooting image 104. Exemplified by the shooting image 104 with image resolution of 1027×768, the size of the partial image within the circled frame 106 is about 300×400 square pixels. However, when the thumbnail uploading size requested by the system provider is 600×800 or above, the user usually have to further perform the image processing step of enlarging or reducing a image on the clipped thumbnail figure 108 and then the resolution of the thumbnail 110 through the image processing step gets poor. Therefore, the texture of the figure in the thumbnail is blurred and even the whole shape of the figure is changed or distorted in color.

### SUMMARY OF THE INVENTION

The invention is directed to an image cropping method directly cropping the object image without further performing image processing on the shot image.

The invention is directed to a digital image device automatically adjusting the shooting parameter set to crop the object image with the specific size.

The invention is directed to an image cropping system performing a thumbnail figure mode shooting for the object according to a specific size without adjusting the object image size afterwards and sacrificing the resolution of the object image.

The invention provides an image cropping method adapted to a digital image device to take a digital image of an object with a predetermined image size wherein the digital image device is set in a first shooting parameter set. The image cropping method comprises performing an object detection to obtain a first object image size of the object under the first shooting parameter set of the digital image device. Afterwards, the first shooting parameter set of the digital image device is changed to a second shooting parameter set according to the first object image size and the predetermined image size so as to change the first object image size of the object to a second object image size under the second shooting parameter set wherein the second object image size approximates to the predetermined image size. Also, a preliminary image of the object is taken with the digital image device set in the second shooting parameter set. Next, the preliminary image is directly cropped into the digital image according to the predetermined image size. Then, the digital image is stored.

In one embodiment of the invention, the first shooting parameter set of the aforementioned image cropping method comprises a shooting focus and a resolution of the digital image device. Also, the step of changing the first shooting parameter set to the second shooting parameter set comprises changing both the shooting focus and the resolution of the digital image device to form the second shooting parameter set. In addition, the step of changing the first shooting parameter set to the second shooting parameter set comprises changing the resolution of the digital image device under the condition of fixing the shooting focus of the digital image device. Besides, the step of changing the first shooting parameter set to the second shooting parameter set comprises changing the shooting focus of the digital image device under the condition of fixing the resolution of the digital image device.

In one embodiment of the invention, the object in the aforementioned image cropping method comprises humans, creatures, or articles.

The invention further provides a digital image device adapted to take a digital image of an object with a predetermined image size wherein the digital image device is set in a first shooting parameter set. The digital image device includes a storage medium and a processor. The storage medium stores an image processing program. The processor executes the image processing program wherein the image processing program comprises a plurality of instructions. The instructions comprises performing an object detection to obtain a first object image size of the object under the first shooting parameter set of the digital image device. The first shooting parameter set of the digital image device is changed to a second shooting parameter set according to the first object image size and the predetermined image size so as to change the first object image size of the object to a second object image size under the second shooting parameter set wherein the second object image size approximates to the predetermined image size. A preliminary image of the object is taken with the digital image device set in the second shooting parameter set. The preliminary image directly is cropped into the digital image according to the predetermined image size. The digital image is stored in the storage medium.

In one embodiment of the invention, the first shooting parameter set of the aforementioned digital image device comprises a shooting focus and a resolution of the digital image device. Also, the instruction of changing the first shooting parameter set to the second shooting parameter set comprises changing both the shooting focus and the resolution of the digital image device to form the second shooting parameter set. In addition, the instruction of changing the first shooting parameter set to the second shooting parameter set comprises changing the resolution of the digital image device under the condition of fixing the shooting focus of the digital image device. Besides, the instruction of changing the first shooting parameter set to the second shooting parameter set comprises changing the shooting focus of the digital image device under the condition of fixing the resolution of the digital image device.

In one embodiment of the invention, the object of the aforementioned digital image device comprises humans, creatures, or articles.

The invention further provides an image cropping system adapted to a digital image device to take a digital image of an object with a predetermined image size wherein the digital image device is set in a first shooting parameter set. The image cropping system comprises an object detecting module, a parameter changing module, a shooting device, an image cropping module, and a storage medium. The object detecting module detects the object to obtain a first object image size of the object under the first shooting parameter set of the digital image device. The parameter changing module changes the first shooting parameter set of the digital image device to a second shooting parameter set according to the first object image size and the predetermined image size so as to change the first object image size of the object correspondingly to a second object image size under the second shooting parameter set wherein the second object image size approximates to the predetermined image size. The shooting device takes a preliminary image of the object with the digital image device set in the second shooting parameter set. The image cropping module directly crops the preliminary image into the digital image according to the predetermined image size. The storage medium stores the digital image.

In one embodiment of the invention, the first shooting parameter set of the aforementioned image cropping system comprises a shooting focus and a resolution of the digital image device. Also, the parameter changing module changing the first shooting parameter set to the second shooting parameter set comprises changing both the shooting focus and the resolution of the digital image device to form the second shooting parameter set. In addition, the parameter changing module changing the first shooting parameter set to the second shooting parameter set comprises changing the resolution of the digital image device under the condition of fixing the shooting focus of the digital image device. Besides, the parameter changing module changing the first shooting parameter set to the second shooting parameter set comprises changing the shooting focus of the digital image device under the condition of fixing the resolution of the digital image device.

In one embodiment of the invention, the object in the aforementioned image cropping system comprises humans, creatures, or articles.

In the invention, the object image size of the preliminary image after shooting approximates to the predetermined image size by detecting the object image size of the object before shooting and then changing the shooting parameter set of the digital image device according to the comparison between the detected object image size and the predetermined image size. By directly clipping the shot preliminary image, the digital image approximating or equal to the predetermined image size may be cropped without additionally image processes such as enlargement or reduction for the digital image to meet the predetermined image size. Therefore, the digital image may not have the problem of poor resolution resulted from the enlarging or reducing process. In addition, the size uniformity of the all object cropping results may be risen. Besides, storing the digital image after being cropped may reduce the occupied storing space of the storage medium for storing the object image.

In order to make the aforementioned and other features and advantages of the invention more comprehensible, several embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic view of a conventional image cropping method.

FIG. 2 is a schematic view of an imaging cropping system according to one embodiment of the invention.

FIG. 3 is a simplified flow chart of an imaging cropping method according to one embodiment of the invention.

FIG. 4 is a schematic view showing the object image size changing with the variation of the shooting parameter set of an image cropping method according to one embodiment of the invention.

### DESCRIPTION OF EMBODIMENTS

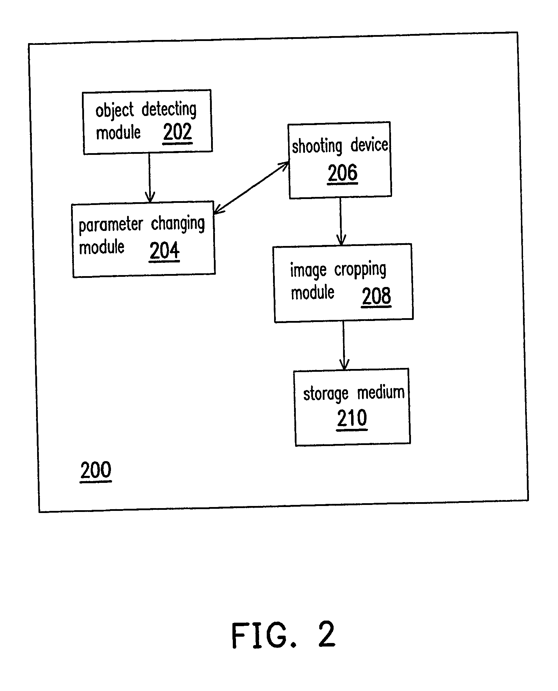

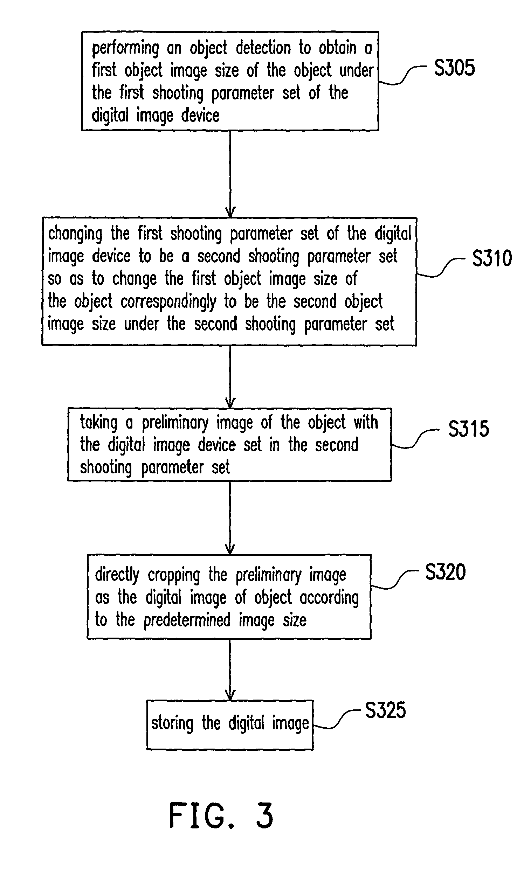

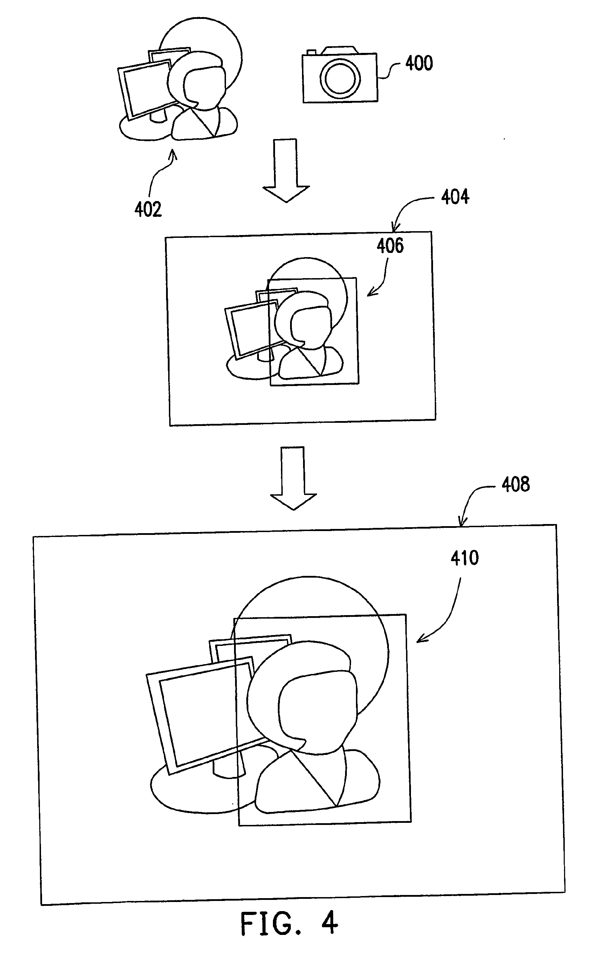

FIG. 2 is a schematic view of an imaging cropping system according to one embodiment of the invention. Please refer to FIG. 2. The imaging cropping system 200 of the invention at least includes an object detecting module 202, a parameter changing module 204, a shooting device 206, an image cropping module 208, and a storage medium 210. FIG. 3 is a simplified flow chart of an imaging cropping method according to one embodiment of the invention. FIG. 4 is a schematic view showing the object image size changing with the variation of the shooting parameter set of an image cropping method according to one embodiment of the invention. As shown in FIG. 2, FIG. 3, and FIG. 4, the image cropping system and method of the invention are adapted to a digital image device 400 to take a digital image of an object 402 with a predetermined image size. The digital image device 400 is, for example, a digital camera or a portable device with the digital shooting function including a mobile phone, smart phone, personal digital assistant, etc. The aforementioned object 402 includes humans, creatures, or articles. Additionally, the aforementioned predetermined image size is, for example, one of the several predetermined values of a thumbnail figure shooting mode of the digital image device, or a predetermined image size set by a user when the user uses the thumbnail figure shooting mode of the digital image device. Besides, the aforementioned digital image device 400 is set in a first shooting parameter set. The first shooting parameter set is, for example, the shooting parameter predetermined within the system of the digital image device 400 or the shooting parameter set according to the user's preference. Furthermore, the above-mentioned first shooting parameter set at least includes a shooting focus and a resolution.

Please refer to FIG. 2, FIG. 3, and FIG. 4. In the step S305, the object detecting module 202 performs an object detection to obtain a first object image size of the object 402 under the first shooting parameter set of the digital image device. In one embodiment of the invention, when the resolution of the first shooting parameter set of the digital image device is set in 78 mega-pixels (i.e., 1024×768), the object 402 may be detected and then a frame 406 for the object 402 is outlined in the preview image 404. The aforementioned object detecting module 202 is, for example, a face recognition module so as to recognize the position of the object through the characteristics of the face in the preview image 404 and outline the recognized humans, objects, or creatures in the preview image 404 by a frame 406. The image size of the frame 406 is calculated as the first object image size according to the resolution setting of the first shooting parameter set of the digital image device 400 at the time detecting the object. In the embodiment of the invention, when the resolution of the first shooting parameter set of the digital image device is set to 78 mega-pixels (i.e., 1024×768), the first object image size obtained through detecting the object 402 by the object detecting module 202 is 300×400.

Afterwards, in the step S310, the parameter changing module 204 changes the first shooting parameter set of the digital image device to be a second shooting parameter set according to the first object image size and the predetermined image size so as to change the first object image size of the object correspondingly to be the second object image size under the second shooting parameter set. In other words, when the predetermined image size is 600x800 and the first object image size is 300x400, the first shooting parameter set is changed to the second shooting parameter set. Namely, the shooting focus and the resolution of the first shooting parameter set of the digital image device are both changed to form the second shooting parameter set. Moreover, the resolution of the digital image device is changed solely under the condition of fixing the shooting focus of the digital image device. Otherwise, the shooting focus of the digital image device is changed solely under the condition of fixing the resolution of the digital image device.

More specifically, as shown in the FIG. 4, in the embodiment of the invention, when the predetermined image size is 600x800, the shooting resolution of the digital image device 400 is set to 600x800, and the first object image size of the object 402 obtained from the object detection is 300x400, the resolution of the digital image device 400 may be changed solely from 1024x768 to 2048×1536 under the condition of fixing the shooting focus of the digital image device 400 so as to make the size of the object image cropped eventually meet the predetermined image size. Therefore, the object image size of the object 402 with the resolution of the digital image device 400 set to 2048×1536 rises from the first object image size 300×400 to the second object image size 600×800. Thus, the second object image size of the object 402 further approximates to the predetermined image size (600×800).

In the embodiment of the invention, the shooting focus is fixed but the resolution of the digital device is adjusted automatically to adjust the object image size to approximate to the predetermined image size. Nonetheless, the invention is not limited thereto. In other words, the method to adjust the object image size to approximate to the predetermined image size may further be achieved by adjusting both the shooting focus and the resolution automatically, or adjusting the shooting focus automatically with fixing resolution.

Next, in the step S315, the shooting device 206 receives a shooting signal to take a preliminary image 408 of the object 402 with the digital image device 400 set in the second shooting parameter set. Then, in the step S320, the image cropping module 208 directly crops the preliminary image 408 as the digital image 410 of object 402 according to the predetermined image size (such as the exemplified 600×800 in the aforementioned embodiment). Subsequently, the digital image 410 is stored in the storage medium 210.

In the aforementioned embodiment, the image cropping method of the invention may be embodied by executing a computer readable program/image processing program and the image cropping system may also be embodied by the computer readable program/image processing program. The computer readable program/image processing program may be stored in a computer readable and writable recording medium/storage medium and may execute several instructions to embody the image cropping method of the invention. The executed steps of the image cropping method are clearly described in the aforementioned embodiments, and thus no further description is provided herein. Additionally, the image cropping method may be embodied by a digital image device. The digital image device includes a storage medium and a processor. The storage medium stores the aforementioned computer readable program/image processing program. The processor executes the aforementioned computer readable program/image processing program to embody the image cropping method of the invention. The steps of the image cropping method executed by the processor are clearly described in the aforementioned embodiments, and thus no further description is provided herein.

Accordingly, in the invention, the object image size of the preliminary image after shooting approximates to the predetermined image size by detecting the object image size of the object before shooting and then changing the shooting parameter set of the digital image device according to the comparison between the detected object image size and the predetermined image size. By directly clipping the shot preliminary image, the digital image approximating or equal to the predetermined image size may be cropped without additionally image processes such as enlargement or reduction for the digital image to meet the predetermined image size. Therefore, the digital image may not have the problem of poor resolution resulted from the enlarging or reducing process. Furthermore, in the conventional arts, manually outlining the required image, and then enlarging or reducing the image result in either the uneven image size or the poor resolution of the eventual digital image. In contrast with the above conventional arts, the image cropping system of the invention may automatically detect the object image size, adjust the shooting parameter set, and crop the preliminary image as the digital image with the image size approximating to the predetermined image size. Users may use the image cropping method and system of the invention by just selecting the thumbnail figure shooting mode of the digital image device to obtain the digital image with the image size approximating to or even equal to the predetermined image size by directly shooting the object without sacrificing the resolution of the digital image but further increasing the uniformity of the object image size of the results of the thumbnail figure shooting. Besides, the file size of the digital image cropped directly is smaller than that of the preliminary image, and thus storing the digital image cropped may reduce the occupied storing space of the storage medium.

Although the invention has been described with reference to the above embodiments, it will be apparent to one of the ordinary skill in the art that modifications to the described embodiment may be made without departing from the spirit of the invention. Accordingly, the scope of the invention will be defined by the attached claims not by the above detailed descriptions.

## Claims

1. An image cropping method adapted to a digital image device(400) to take a digital image(410) of an object(402) with a predetermined image size, wherein the digital image device(400) is set with a first shooting parameter set, the image cropping method comprising:
performing an object detection to obtain a first object image size of the object(402) under the first shooting parameter set of the digital image device(400);
changing the first shooting parameter set to a second shooting parameter set according to the first object image size and the predetermined image size so as to change the first object image size of the object(402) to be a second object image size under the second shooting parameter set, wherein the second object image size is substantially equal to the predetermined image size; and
taking a preliminary image(408) of the object(402) with the digital image device(400) set with the second shooting parameter set.

2. The image cropping method as claimed in claim 1 further comprising directly cropping the preliminary image(408) into the digital image(410) according to the predetermined image size.

3. The image cropping method as claimed in claim 1 further comprising storing the digital image(410).

4. The image cropping method as claimed in claim 1, wherein the first shooting parameter set comprises a shooting focus and a resolution of the digital image device(400).

5. The image cropping method as claimed in claim 4, wherein the step of changing the first shooting parameter set to be the second shooting parameter set comprises changing both the shooting focus and the resolution of the digital image device(400) to form the second shooting parameter set.

6. The image cropping method as claimed in claim 4, wherein the step of changing the first shooting parameter set to be the second shooting parameter set comprises changing the resolution of the digital image device(400) while fixing the shooting focus of the digital image device(400).

7. The image cropping method as claimed in claim 4, wherein the step of changing the first shooting parameter set to be the second shooting parameter set comprises changing the shooting focus of the digital image device(400) while fixing the resolution of the digital image device(400).

8. A digital image device(400) adapted to take a digital image(410) of an object(402) with a predetermined image size wherein the digital image device(400) is set in a first shooting parameter set, the digital image device(400) comprising:
a storage medium(210) storing an image processing program;
a processor executing the image processing program wherein the image processing program comprises a plurality of instructions, the instructions comprising:
performing an object detection to obtain a first object image size of the object(402) under the first shooting parameter set of the digital image device(400);
changing the first shooting parameter set of the digital image device(400) to a second shooting parameter set according to the first object image size and the predetermined image size so as to change the first object image size of the object(402) to be a second object image size under the second shooting parameter set, wherein the second object image size is substantially equal to the predetermined image size; and
taking a preliminary image(408) of the object(402) with the digital image device(400) set with the second shooting parameter set.

9. The digital image device(400) as claimed in claim 8, wherein the first shooting parameter set comprises a shooting focus and a resolution of the digital image device(400).

10. The digital image device(400) as claimed in claim 9, wherein the instruction of changing the first shooting parameter set to be the second shooting parameter set comprises changing both the shooting focus and the resolution of the digital image device(400) to form the second shooting parameter set.

11. The digital image device(400) as claimed in claim 9, wherein the instruction of changing the first shooting parameter set to be the second shooting parameter set comprises changing the resolution of the digital image device(400) while fixing the shooting focus of the digital image device(400), or wherein preferably the instruction of changing the first shooting parameter set to be the second shooting parameter set comprises changing the shooting focus of the digital image device(400) while fixing the resolution of the digital image device(400).

12. An image cropping system adapted to a digital image device(400) to take a digital image(410) of an object(402) with a predetermined image size wherein the digital image device(400) is set in a first shooting parameter set, the image cropping system comprising:
an object detecting module(202) detecting the object(402) to obtain a first object image size of the object(402) under the first shooting parameter set of the digital image device(400);
a parameter changing module(204) changing the first shooting parameter set of the digital image device(400) to a second shooting parameter set according to the first object image size and the predetermined image size so as to change the first object image size of the object(402) correspondingly to be a second object image size under the second shooting parameter set, wherein the second object image size is substantially equal to the predetermined image size; and
a shooting device(206) taking a preliminary image(408) of the object(402) with the digital image device(400) set in the second shooting parameter set.

13. The image cropping system as claimed in claim 12, wherein the first shooting parameter set comprises a shooting focus and a resolution of the digital image device(400).

14. The image cropping system as claimed in claim 13, wherein the parameter changing module(204) changing the first shooting parameter set to be the second shooting parameter set comprises changing both the shooting focus and the resolution of the digital image device(400) to form the second shooting parameter set, or wherein preferably the parameter changing module(204) changing the first shooting parameter set to be the second shooting parameter set comprises changing the resolution of the digital image device(400) while fixing the shooting focus of the digital image device(400), or wherein preferably the parameter changing module(204) changing the first shooting parameter set to be the second shooting parameter set comprises changing the shooting focus of the digital image device(400) while fixing the resolution of the digital image device(400).

15. The image cropping system as claimed in claim 12, wherein the object(402) comprises humans, creatures, or articles.
